# EUROPÄISCHE PATENTANMELDUNG

(11) **EP 0 555 784 A1**
(43) Veröffentlichungstag der Anmeldung: **18.08.1993**
(21) Anmeldenummer: 93101845.1
(22) Anmeldetag: 05.02.1993
(51) Int. Cl.: B03B 11/00, B03B 5/28, B29B 17/02

(54) **Vorrichtung zur Sortierung von Feststoffgemischen**

(30) Priorität: 11.02.1992 DE 4203896; 21.03.1992 DE 4209277
(71) Anmelder: Arhelger, Gunther, D-47509 Rheurdt (DE)
(72) Erfinder: Arhelger, Gunther, W-5064 Rösrath (DE); Speck, Manfred, W-5064 Rösrath (DE)

(57) **Zusammenfassung**

Bei der Trennung von Feststoffen, insbesondere von Kunststoffen nach ihrer Dichte durch eine Schwimm-Sink-Scheidung ergeben sich Schwierigkeiten der Trennung durch Turbulenzen in der aus den Feststoffen und der Trennflüssigkeit gebildeten Suspension sowie durch an den Oberflächen der Feststoffe anhaftende Verunreinigungen, z. B. feine Stäube, die das Benetzungsverhalten beeinflussen und durch anhaftende Luftbläschen, die das Sinkverhalten beeinflussen. Durch die erfindungsgemäße Vorrichtung (10), wobei eine Rühreinrichtung (11) mit hohem Energieeintrag auch die Schwimmstoffe zunächst in die Suspension hineinzwingt, gelingt es, die oben beschriebenen Nachteile weitgehend auszuschalten.

## Beschreibung

Die Erfindung ist auf eine Vorrichtung zur Durchführung einer naßmechanischen Trennung von Feststoffen, insbesondere von Kunststoffen, nach ihrer Dichte durch eine Schwimm-Sink-Scheidung, bestehend aus einem Trenngefäß mit einer Zuführeinrichtung für die zu trennenden Feststoffe und der Trennflüssigkeit, mit einer Austragsvorrichtung für das Schwimmgut sowie mit einer Austragsöffnung für das Sinkgut gerichtet.

Vorrichtungen für die Sortierung von Feststoffen nach ihrer Dichte sind bereits bekannt. So wird in der DE-PS 29 00 666 über die Trennung von Kunststoffen berichtet und unter anderem ausgeführt, daß beispielsweise in Konusscheidern Kunststoffe mit Dichteunterschiede bis zu 0,02 g/cm³ getrennt werden können, wenn das Auftreten von Turbulenzen in der Trennflüssigkeit, die durch den Feststoffeintrag sowie den Austragsvorrichtungen zwangsläufig erzeugt werden, durch verfahrenstechnische und bauliche Maßnahmen minimiert werden können.

In der WO 91/04 100 wird ein Verfahren und eine Vorrichtung zur Trennung von Kunststoffen nach ihrer Dichte beschrieben, wobei die zu trennenden Stoffe an einem Ende eines eckigen länglichen Behälters aufgegeben werden und das Schwimmgut am anderen Ende des Behälters abgezogen wird. Der Austrag de Sinkgutes erfolgt hierbei mittels eines Förderbandes, das sich am Boden des Behälters über dessen gesamte Länge erstreckt. Nachteilig sind bei diesem bekannten Verfahren nicht nur die große und aufwendige Konstruktion der Trennvorrichtung, sondern auch die auftretenden Turbulenzen, die zusätzlich durch das Förderband in der Trennflüssigkeit hervorgerufen werden sowie die Maßnahme, das Sinkgut durch das Förderband aus der Suspension und gegebenenfalls dabei durch eine Schwimmgutschicht herauszuheben, wodurch gleichfalls Schwimmgut mit dem Sinkgut ausgetragen werden kann.

Aufgabe der vorliegenden Erfindung ist es, eine Vorrichtung zur Durchführung einer Trennung nach der Dichte durch eine Schwimm-Sink-Scheidung zu schaffen, welche unter Vermeidung der bestehenden Nachteile bekannter Vorrichtungen mit einfachen Mitteln eine hohe Trennschärfe der Sortierung ermöglicht.

Die gestellte Aufgabe wird gemäß der Erfindung mit den Maßnahmen des Kennzeichnungsteils des Anspruchs 1 gelöst. Vorteilhafte Ausgestaltungen der Erfindung sind in den Unteransprüchen angegeben.

Durch die erfindungsgemäße Anordnung der Zuführeinrichtung für die zu trennenden Feststoffe wird erreicht, daß die aus den Feststoffen und der Trennflüssigkeit gebildete Suspension zentral innerhalb der im Trenngefäß vorhandenen Suspension in diese eingetragen wird. Da der Eintrag sternförmig über mehrere Öffnungen erfolgt, kann sich im Trenngefäß keine unerwünschte Drehströmung, sondern nur eine geringe nach oben gerichtete Strömung ausbilden.

Gemäß der Erfindung sind in der Zuführeinrichtung eine oder mehrere Rühreinrichtungen angeordnet. Die Drehflügel der Rühreinrichtung sind so gestaltet, daß sie im zylindrischen Teil der Zuführeinrichtung eine abwärts gerichtete Strömung in der Trennflüssigkeit erzeugen, wodurch die oben auf die Trennflüssigkeit aufgegebenen Feststoffe in die Trennflüssigkeit eingezogen werden. Hierbei werden sie so intensiv verwirbelt und vermischt, daß eine vollständige Benetzung der einzelnen Feststoffpartikel erfolgt und anhaftende Staubanteile und Luftbläschen von den Oberflächen entfernt werden.

Durch die abwärts gerichtete Strömung werden die Feststoffpartikel mit hoher Turbulenz weiter nach unten bis zu einer den zylindrischen Teil der Zuführeinrichtung abschließenden Platte geführt und gelangen durch unmittelbar oberhalb der Abschlußplatte radial angeordnete kanalförmig ausgebildete Austrittsöffnungen in das Trenngefäß.

Durch die Umlenkung der aus den Feststoffen und der Trennflüssigkeit gebildeten Suspension an der Abschlußplatte, dem Durchtritt der Suspension durch kanalförmige Austrittsöffnungen und durch die plötzliche Verminderung der Strömungsgeschwindigkeit der Suspension bei ihrem Eintritt in das Trenngefäß werden die durch die Rühreinrichtung erzeugten Turbulenzen weitgehend abgebaut. Dabei wirkt sich auch günstig aus, daß nur so viel Trennflüssigkeit in die Zuführeinrichtung gegeben wird, wie durch den Austrag des Schwimmgutes und des Sinkgutes infolge anhaftender Trennflüssigkeit mit ausgetragen wird und so verloren geht. Die Suspension innerhalb der Zuführeinrichtung besitzt somit eine höhere Feststoffkonzentration als die Suspension im Trenngefäß, was sowohl den Vorgang der Benetzung im oberen Teil der Zuführeinrichtung (die Feststoffteilchen reiben wie in einer Attritionszelle aneinander) als auch der Vermeidung von Turbulenzen beim Suspensionseintritt in das Trenngefäß (es wird wenig Volumen eingetragen) entgegenkommt.

In vorteilhafter Ausgestaltung der Erfindung ist die Rühreinrichtung im zylindrischen Teil der Zuführeinrichtung exzentrisch zur Zuführungseinrichtungsachse angeordnet, um den Einzug der Feststoffe in die Trennflüssigkeit und die Verwirbelung der Feststoffe in der gebildeten Suspension auch bei stark aufschwimmenden Feststoffen, z. B. geschäumte Kunststoffe, zu ermöglichen.

Bei großen und beispielsweise rechteckigen Trenngefäßen können in vorteilhafter Ausgestaltung der Erfindung auch mehrere Zuführeinrichtungen nebeneinander angeordnet sein, um eine bessere Nutzung des Trenngefäßvolumens zu erreichen und den Suspensionseintrag ohne eine Erhöhung der Strömungsgeschwindigkeit zu ermöglichen.

Bei Versuchen mit Kunststoffmischungen, die stark mit Metallstückchen versetzt waren, zeigte sich, daß die Metallstückchen bevorzugt auf der unteren Abschlußplatte liegen bleiben. In vorteilhafter Weiterbildung der Erfindung ist es deshalb möglich, diese Abschlußplatte trichterförmig auszubilden und die sich ansammelnden schweren Teilchen über eine separate Austragsöffnung mit einer Rohrleitung aus dem Trenngefäß herauszuführen, wobei der Austrag durch eine Vibrationseinrichtung, die die Abschlußplatte in Vibrationen versetzt, erleichtert werden kann.

Insbesondere bei Trennvorgängen, bei denen nicht reines Wasser, sondern andere flüssige Stoffe, wie beispielsweise organische Lösungen, Schwertrübe, Salzlösungen etc., als Trennflüssigkeit verwendet werden, ist es von Vorteil, daß die mit den Feststoffausträgen mit ausgetragene Trennflüssigkeit durch entsprechende Vorrichtungen, beispielsweise Siebe, von den Feststoffen abgetrennt und im Kreislauf zum Trenngefäß zurückgeführt werden. In diesen Fällen braucht nur die an den Feststoffen anhaftende Trennflüssigkeit durch eine entsprechende Menge an frischer Trennflüssigkeit ersetzt werden.

Bei Feststoffmischungen, die aus mehr als zwei Komponenten bestehen, werden vorteilhaft zwei Trenngefäße hintereinandergeschaltet, wobei der Sinkgutaustrag des ersten Trenngefäßes mit der Zuführeinrichtung des zweiten Trenngefäßes verbunden ist - bei Bedarf mit einer zwischengeschalteten Abtrennvorrichtung für die Trennflüssigkeit -, wobei die Dichte der Trennflüssigkeit im zweiten Trenngefäß höher ist als die Dichte der Trennflüssigkeit im ersten Trenngefäß. Bei Bedarf können in gleicher Weise weitere Trenngefäße in entsprechender Weise nachgeschaltet werden. Auf diese Weise wird es möglich, in einem kontinuierlichem Ablauf eine Schwimm-Sink-Trennung in mehrere, durch ihre Dichte sich unterscheidende, Produkte durchzuführen.

Die Trennvorrichtung gemäß der Erfindung wird an einem Ausführungsbeispiel anhand einer schematischen Zeichnung näher erläutert.

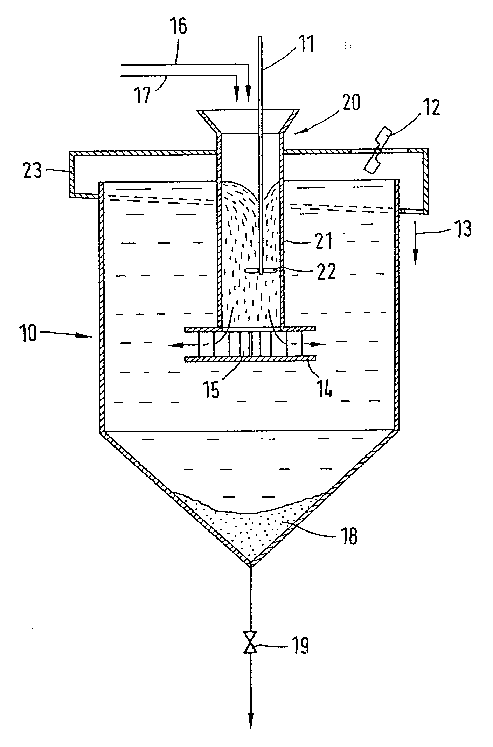

Die Zeichnung zeigt einen vertikalen Schnitt durch ein Trenngefäß (10). Das zylindrische Trenngefäß (10) besitzt einen unten konisch und spitz zulaufendes Ende mit einer Austragsvorrichtung (19) zum Austrag des Sinkgutes (18) und oben eine Sammelrinne (23) zum Auffangen des über den Rand des Trenngefäßes ausgetragenen Schwimmgutes. Ein oder mehrere am Rand des Trenngefäßes angeordnete mechanisch angetriebene Hilfseinrichtungen (12), z. B. Paddel, unterstützen den Austrag des Schwimmgutes in die Sammelrinne.

Die zu trennenden Feststoffe werden über eine geeignete, in der Zeichnung nicht näher dargestellte, Vorrichtung (16), beispielsweise eine Transportschnecke, und die Trennflüssigkeit über eine Leitung (17) der Zuführeinrichtung (20) zugeführt. In dieser Zuführeinrichtung (20) werden die Feststoffe und die Trennflüssigkeit durch eine Rühreinrichtung (11) mit Drehflügeln (22) innig miteinander vermischt und verwirbelt und zum unteren Ende der Zuführeinrichtung, die axial mit einer Abschlußplatte (14) verschlossen ist, gefördert. Durch radial angeordnete kanalförmig ausgebildete Austrittsöffnungen (15) gelangt die aus den Feststoffen und der Trennflüssigkeit gebildete Suspension in das Trenngefäß, wo nun eine Trennung in Sinkgut und Schwimmgut stattfindet.

Das Sinkgut (18) sammelt sich am konischen unteren Ende des Trenngefäßes (10) und wird kontinuierlich oder in Intervallen durch die Austragsvorrichtung (19) aus dem Trenngefäß (10) abgezogen. Das Schwimmgut steigt zum oberen Rand des Trenngefäßes (10) und gelangt kontinuierlich über diesen Rand hinweg in die Sammelrinne (23) mit einer Austrittsöffnung (13).

Im angeführten Beispiel ist das Trenngefäß (10) zylindrisch ausgebildet. Es ist aber auch möglich und für den durch eine Austragsvorrichtung (19) unterstützten Schwimmgutaustrag auch von Vorteil, das Trenngefäß im Querschnitt anders zu gestalten, beispielsweise rechteckig.

## Patentansprüche

1. Vorrichtung zur Durchführung einer naßmechanischen Trennung von Feststoffen insbesondere von Kunststoffen nach ihrer Dichte durch eine Schwimm-Sink-Scheidung, bestehend aus einem Trenngefäß mit einer Zuführeinrichtung für die zu trennenden Feststoffe und der Trennflüssigkeit, einer Austragsvorrichtung für das Schwimmgut sowie einer Austragsöffnung für das Sinkgut, dadurch gekennzeichnet, daß die Zuführeinrichtung (20) zylindrisch ausgebildet ist und an ihrem unteren Ende mit einer Abschlußplatte (14) in axialer Richtung verschlossen ist und in radialer Richtung mehrere, kanalförmig ausgebildete, Austrittsöffnungen (15) für die Feststoffe und die Trennflüssigkeit angeordnet sind und innerhalb der Zuführeinrichtung (20) mindestens eine mit Drehflügeln (22) versehene Rühreinrichtung angeordnet ist und daß die Zuführeinrichtung (20) mittig innerhalb des Trenngefäßes (10) so angeordnet ist, daß sie im Betriebszustand mit ihrem unteren Ende tief in die aus den Feststoffen und der Trennflüssigkeit gebildeten Suspension eintaucht.

2. Vorrichtung nach Anspruch 1, dadurch gekennzeichnet, daß die Rühreinrichtung (11) im unteren Drittel der zylindrischen Zuführeinrichtung (20) und exzentrisch zur Zuführungseinrichtungsachse angeordnet ist.

3. Vorrichtung nach Anspruch 2, dadurch gekennzeichnet, daß mindestens zwei Zuführeinrichtungen (20) im Trenngefäß (10) nebeneinander angeordnet sind.

4. Vorrichtung nach Anspruch 1, 2 oder 3, dadurch gekennzeichnet, daß die Abschlußplatte (14) der Zuführeinrichtung (20) trichterförmig ausgebildet und an ihrem unteren Ende mit einer Austragsöffnung versehen ist und die Austragsöffnung mit einer Rohrleitung, die aus das Trenngefäß (10) führt, verbunden ist.

5. Vorrichtung nach Anspruch 4, dadurch gekennzeichnet, daß die Abschlußplatte (14) mit einer Vibrationseinrichtung in Verbindung steht.

6. Vorrichtung nach einem der vorhergehenden Ansprüche, dadurch gekennzeichnet, daß die nach dem Austrag vom Schwimmgut und vom Sinkgut abgetrennte Trennflüssigkeit im Kreislauf zum Trenngefäß (10) zurückgeführt wird.

7. Vorrichtung nach einem der vorhergehenden Ansprüche, dadurch gekennzeichnet, daß die Austragsvorrichtung (19) für das Sinkgut mit der Zuführeinrichtung (20) eines weiteren Trenngefäßes verbunden ist.
